# EUROPÄISCHE PATENTSCHRIFT

(11) **EP 3 819 108 B1**
(45) Veröffentlichungstag und Bekanntmachung des Hinweises auf die Patenterteilung: **16.08.2023**
(21) Anmeldenummer: 20203587.9
(22) Anmeldetag: 23.10.2020
(51) Int. Cl.: B29D 30/00, B29D 30/06, B29B 13/02, B29C 35/02, H05B 6/60, H05B 1/02

(54) **VORRICHTUNG UND VERFAHREN ZUM VORWÄRMEN VON REIFENROHLINGEN**
DEVICE AND METHOD FOR PRE-HEATING TYRE BLANKS
DISPOSITIF ET PROCÉDÉ DE PRÉCHAUFFAGE DES ÉBAUCHES DE PNEUMATIQUES

(30) Priorität: 05.11.2019 DE 202019004503 U
(43) Veröffentlichungstag der Anmeldung: 12.05.2021
(73) Patentinhaber: Gawronski GmbH, 73765 Neuhausen (DE)
(72) Erfinder: GAWRONSKI, Seweryn, 73765 Neuhausen (DE)
(74) Vertreter: Spachmann, Holger

(56) Entgegenhaltungen:
- EP-A1- 0 468 342
- EP-A2- 0 054 533
- EP-A2- 0 055 237
- DE-A1- 4 101 729
- KR-U- 20090 010 069

## Beschreibung

Die Erfindung betrifft eine Vorrichtung und ein Verfahren zum Vorwärmen von Reifenrohlingen.

Aus dem Stand der Technik ist bekannt, Reifenrohlinge vorzuwärmen, bevor sie in einer Vulkanisierpresse vulkanisiert werden, um die bei der Vulkanisierung erforderliche Wärmezufuhr zu reduzieren und die Verweilzeit des Reifenrohlings in der Vulkanisierpresse herabzusetzen, sodass eine bessere Ausnutzung der Presse möglich ist. Die Reifenrohlinge können dazu in eine abgeschlossene Vorwärmkammer eingebracht werden, in die Ultrahochfrequenzenergie eingeleitet wird.

Die DE 2 134 526 B1 beschreibt ein solches Verfahren und eine dazugehörige Vorrichtung zum Vorwärmen eines Reifenrohlings durch Zufuhr von Ultrahochfrequenzenergie, wobei eine Überhitzung dünnwandiger Zonen vermieden werden soll. Dazu erfolgt das Vorwärmen sämtlicher Zonen in Abhängigkeit vom Volumen und den Werkstoffeigenschaften der Zonen auf verschieden hohen Temperaturen. Die dazu verwendete Vorrichtung weist eine Vorwärmkammer, in der der Reifenrohling eingeschlossen und mittels einer Einspannvorrichtung drehbar festgelegt wird, und eine Einrichtung zur Zufuhr von Ultrahochfrequenzenergie auf. Dabei ist die Vorwärmkammer durch für Ultrahochfrequenzenergie undurchlässige Zwischenwände in Zonen unterteilt, in die je ein gesonderter für eine unterschiedlich hohe Zufuhr von Ultrahochfrequenzenergie ausgelegter Ultrahochfrequenzenergiegeber mündet.

Die DE 41 01 729 A1 betrifft eine Vorrichtung zum Vorwärmen von Reifenrohlingen mit einer Vorwärmkammer, durch die eine Transportbahn verläuft. In der Vorwärmkammer werden die Reifenrohlinge mittels einer UHF-Erwärmungsvorrichtung vorgewärmt. Im Anschluss werden die vorgewärmten Reifenrohlinge mit der Transportbahn in eine Warmhaltekammer überführt und entweder mittels einer Weiche auf unterschiedliche Transportbahnabschnitte verteilt oder in Kabinen eines Paternosteraufzugs eingeschoben, aus dem sie auf der gegenüberliegenden Seite entnommen werden.

Die DE 10 2015 003 349 A1 betrifft eine Vorrichtung, die eine zusätzliche thermische Energiequelle benötigt und offenbart hierfür eine Strahlungswärmequelle, um ein kontaktloses Einbringen von thermischer Energie in das Material der Reifenrohlinge zu ermöglichen. Als Strahlungswärmequelle offenbart die D2 IR-Strahler, Laser-Dioden sowie Mikrowelleneinrichtungen und nennt auch ein Anströmen mit Heißluft bzw. Heißgas als kontaktlose Beheizungsmöglichkeit.

Ausgehend von diesem Stand der Technik ist es Aufgabe der vorliegenden Erfindung, eine energiesparende bzw. hinsichtlich der Energieeffizienz verbesserte Vorwärmung für Reifenrohlinge vor dem Vulkanisieren in einer Vulkanisierpresse bereitzustellen.

Diese Aufgabe wird durch eine Vorrichtung und ein Verfahren zum Vorwärmen von Reifenrohlingen mit den Merkmalen des unabhängigen Anspruchs 1 gelöst.

Die weitere Aufgabe der energieeffizienteren Fertigung von vulkanisierten Reifen aus Reifenrohlingen wird durch eine Anlage mit den Merkmalen des unabhängigen Anspruchs 10 sowie durch ein Verfahren mit den Merkmalen des Anspruchs 13 gelöst.

Weiterbildungen der Vorrichtung und der Anlage sind in den Unteransprüchen ausgeführt.

Eine erste Ausführungsform der erfindungsgemäßen Vorrichtung zum Vorwärmen von Reifenrohlingen bezieht sich darauf, dass die Vorrichtung eine Vorwärmkammer mit einem Gehäuse aufweist. Eine umlaufende Transportvorrichtung, die eine Umlauflagerstrecke bereitstellt, ist ganz oder teilweise in der Vorwärmkammer angeordnet. "Umlaufende Transportvorrichtung" meint dabei außer einem endlos laufenden Element durchaus auch Elemente, bei denen ein Anfang und ein Ende räumlich voneinander getrennt vorliegen. Allen Vorrichtungen, die hierin als umlaufende Transportvorrichtung gemeint sind, ist gemein, dass sie über einen Umlauflagerstreckenanfang der Umlauflagerstrecke an zumindest einem Eingang des Gehäuses verfügen und mit einer Zufuhrvorrichtung für einerseits vorzuwärmende Reifenrohlinge und andererseits über heiße und damit zur Wärmeübertragung geeignete vulkanisierte Reifen operativ gekoppelt sind. "Operativ gekoppelt" heißt dabei, dass ab dort, wo die Zufuhrvorrichtung die jeweiligen Reifen bzw. Reifenrohlinge am Eingang des Gehäuses dem Umlauflagerstreckenanfang zur Verfügung stellt, ein Vorgang mit den Reifen bzw. Reifenrohlingen vor sich geht. Dasselbe trifft für das Umlauflagerstreckenende der Umlauflagerstrecke zu, das an zumindest einem Ausgang des Gehäuses bereitgestellt wird und das mit einer Abfördervorrichtung operativ im vorstehenden Sinne gekoppelt ist.

Die Zufuhrvorrichtung verfügt über zumindest eine erste Anfördereinrichtung, die dazu ausgebildet ist, über den Eingang dem Umlauflagerstreckenanfang Reifenrohlinge mit einer vorbestimmten ersten Temperatur zuzuführen, und über zumindest eine zweite Anfördereinrichtung, die dazu ausgebildet ist, vulkanisierte Reifen mit einer vorbestimmten ersten Temperatur, die höher ist als die erste Temperatur der Reifenrohlinge, dem Umlauflagerstreckenanfang zuzuführen. Der Vorgang, der also ablaufen wird, wenn Reifen einer höheren Temperatur und Reifenrohlinge einer niedrigeren Temperatur auf die hier so genannte Umlauflagerstrecke gebracht werden und über eine gewisse Verweildauer gemeinsam in dem Gehäuse verbringen, ist ein Wärmeübergang. Dieser Wärmeübergang - in Bezug auf die gemeinsam entlang der Umlauflagerstrecke geförderten Reifen und Reifenrohlinge untereinander - wird bei Verlassen des Gehäuses der Vorwärmkammer beendet: Die Abfördereinrichtung ist dazu ausgebildet, über den Ausgang von dem Umlauflagerstreckenende sowohl Reifenrohlinge mit einer zweiten Temperatur, die höher ist als die erste Temperatur der Reifenrohlinge, als auch vulkanisierte Reifen mit einer zweiten Temperatur, die niedriger ist als die erste Temperatur der vulkanisierte Reifen, abzuführen.

In energieeffizienter Weise wird hierbei vorteilhaft keine zusätzliche Energie zum Vorwärmen der Reifenrohlinge eingesetzt, da das Gehäuse keine Heizvorrichtung aufweist, sondern die Wärmeenergie der vulkanisierten Reifen direkt aus der Vulkanisieranlage genutzt wird. Insoweit kann eine erhebliche Menge Energie zur Erwärmung der Reifenrohlinge für weitere Bearbeitungsschritte eingespart werden, da frisch zugeführte, warme Reifenrohlinge Ihre Restwärme an bereits in der Vorrichtung gelagerte Reifenrohlinge verteilen, und so die in der umlaufenden Transportvorrichtung gelagerten Reifenrohlinge auf einem höheren thermischen Niveau gehalten werden können. Hierdurch kann zusätzliche Energie zur Wiedererwärmung der Reifenrohlinge für weitere Arbeitsschritte und somit Aufwärmzeit und Energiekosten eingespart werden.

Somit kann die bei einer unmittelbar sich anschließenden Vulkanisierung in einer Vulkanisierpresse, die in einer entsprechenden Fertigungsanlage der erfindungsgemäßen Vorrichtung in Bezug auf die Reifenrohlinge nachgeschaltet sein wird, die erforderliche Wärmezufuhr bzw. die Verweilzeit des Reifenrohlings in der Vulkanisierpresse reduziert werden. Damit ist eine bessere Ausnutzung der Vulkanisierpresse bspw. wegen kürzerer Verweilzeit der einzelnen Reifenrohlinge in der Presse möglich, ohne dass zum Vorwärmen der Reifenrohlinge zusätzliche Energie aufgewendet werden muss.

Die Effizienz kann durch eine thermische Isolierung der Vorwärmkammer bzw. des Gehäuses, sowie durch Wärmeschleusen an Ein- und Ausgang und ggf. eine thermische Isolierung der Fördereinrichtungen weiter verbessert werden.

Die erfindungsgemäße Vorrichtung verfügt in einer bevorzugten Ausführungsform über eine Zufuhrvorrichtung derart, dass die erste Anfördereinrichtung - grundsätzlich können mehrere Anfördereinrichtungen, etwa Förderbänder, parallel verlaufen - an den Eingang angrenzt (oder bei zwei ersten Anfördereinrichtungen könnten auch zwei Eingänge vorliegen) und die zumindest eine zweite Anfördereinrichtung an einem Anschlussende desselben an die erste Anfördereinrichtung anschließt. Natürlich kann auch die zweite Anfördereinrichtung an den Eingang gekoppelt sein, und die erste kann entsprechend an die zweite Anfördereinrichtung gekoppelt sein. Grundsätzlich ist die Ausgestaltung derart, dass wechselweise auf einer Anfördereinrichtung Reifenrohlinge und vulkanisierte Reifen angefordert werden können, oder dass zwei Anfördereinrichtungen, für Reifenrohlinge und vulkanisierte Reifen jeweils eine, diese in das Gehäuse befördern, so dass dort der Wärmeüberschuss der vulkanisierten Reifen bereitgestellt werden kann, der zu einer gewünschten Erwärmung der Reifenrohlinge führt.

Die Abfördervorrichtung weist zumindest eine erste Abfördereinrichtung für die Reifenrohlinge mit der zweiten Temperatur, so dass diese unverzüglich einer Vulkanisierpresse zugeführt werden können, und zumindest eine zweite Abfördereinrichtung für die vulkanisierten Reifen auf, die nun an Temperatur verloren haben (zweite Temperatur) und der weiteren Nutzung zugeführt werden können.

Alternativ zum vorstehenden Beispiel kann sich die zumindest eine erste Anfördereinrichtung auch durch den Eingang hindurch in das Gehäuse erstrecken und in dem Gehäuse als Transportvorrichtung, die eine Umlauflagerstrecke bereitstellt, dienen, um sich durch den Ausgang aus dem Gehäuse heraus zu erstrecken und dann eine erste Abfördereinrichtung zu bilden.

Auch die zweite Anfördereinrichtung kann so gestaltet sein und bspw. als durchgängiges Förderband sich durch den Eingang hindurch in das Gehäuse erstrecken und in dem Gehäuse die Transportvorrichtung, die eine Umlauflagerstrecke bereitstellt, bilden, und sich dann durch den Ausgang aus dem Gehäuse heraus erstrecken und somit eine zweite Abfördereinrichtung bilden.

Die beiden Varianten sehen vor: Im ersten Fall Anfordern der Reifen/Reifenrohlinge und Übergabe auf eine von der Anfördervorrichtung getrennte Umlauffördervorrichtung im Gehäuse und dann wieder Abfördern der Reifen/Reifenrohlinge auf eine von der Umlauffördervorrichtung getrennte Abfördervorrichtung, wobei ein echter Umlauf im Gehäuse stattfinden kann; im zweiten Fall Hindurchführen einer oder mehrerer Fördervorrichtungen durch das Gehäuse, dabei dort die Fördervorrichtung eine oder mehrere Windungen (quasi "Umläufe") vollführen lassen, und wieder Hinausführen der Fördervorrichtung(en).

In einer weiteren Ausführungsform kann die Abfördervorrichtung einen Übergabeförderabschnitt aufweisen, der sich von dem Ausgang der Vorwärmkammer erstreckt und der zur selektiven Übergabe der Reifenrohlinge an die erste Abfördereinrichtung und der vulkanisierten Reifen an die zweite Abfördereinrichtung ausgebildet ist. Alternativ kann die Vorwärmkammer jeweils einen Ausgang zu der ersten und einen Ausgang zu der zweiten Abfördereinrichtung aufweisen, wobei die Vorrichtung entlang der Umlauflagerstrecke für jede Abfördereinrichtung jeweils einen zugeordneten Übergabeförderabschnitt aufweist.

Die Umlauflagerstrecke der Transportvorrichtung in der Vorwärmkammer kann einen Schleifenverlauf mit horizontalen, vertikalen Schleifenabschnitten und/oder wendelförmigen Schleifenabschnitten aufweisen, sodass auf möglichst kleinem Raum eine größtmögliche Umlauflagerstrecke für einen optimalen Wärmeaustausch zwischen den vulkanisierten Reifen und den Reifenrohlingen erreicht werden kann.

In einer bevorzugten Ausführungsform kann die Transportvorrichtung, die die Umlauflagerstrecke bereitstellt, durch eine "Paternostervorrichtung" mit einer Vielzahl von Tablaren gebildet werden, die zum Transport jeweils eines Reifenrohlings oder eines vulkanisierten Reifens ausgebildet sind, und die umlaufend in einem Schleifenverlauf angetrieben werden, der horizontale und vertikale Schleifenabschnitte und/oder zumindest einen aufsteigenden wendelförmig und einen absteigend wendelförmigen Schleifenabschnitt aufweisen kann.

Alternativ zu einer Paternostervorrichtung kann die Transportvorrichtung, die die Umlauflagerstrecke bereitstellt, durch zumindest ein Förderband gebildet werden, das zumindest einen aufsteigend wendelförmigen und einen absteigend wendelförmigen Schleifenabschnitt aufweist.

Ferner kann die Vorrichtung eine Steuerungsvorrichtung aufweisen, die zur Steuerung zumindest der Transportvorrichtung, der Zufuhrvorrichtung und der Abfördervorrichtung derart ausgebildet ist, dass eine Geschwindigkeit der Transportvorrichtung, die die Umlauflagerstrecke bereitstellt, auf die Anfördergeschwindigkeit der Anfördereinrichtungen abstimmbar ist. Ferner kann durch die Steuerungsvorrichtung eine Umlaufrichtung der Umlauflagerstrecke in Abhängigkeit der Positionierung des zumindest einen Ausgangs in Bezug auf den zumindest einen Eingang und/oder eine Anzahl der Umläufe, die jeder Reifenrohling und jeder vulkanisierte Reifen in der Umlauflagerstrecke durchläuft, gewählt werden, um eine vorbestimmbare Verweildauer der Reifenrohlinge und der vulkanisierten Reifen in der Vorwärmkammer zu erzielen. Mittels der Steuerungsvorrichtung können die Reifenrohlinge und die vulkanisierten Reifen nach der vorbestimmten Verweildauer von der Umlaufstrecke aus der Vorwärmkammer ausgeschleust werden, wobei auch eine Abfördergeschwindigkeit der Abfördereinrichtungen auf die Geschwindigkeit der Transportvorrichtung abstimmbar ist.

Ferner kann die Steuerungsvorrichtung zur Steuerung des Übergabeförderabschnitts bzw. einer dort umfassten Übergabemechanik ausgebildet sein.

Die erfindungsgemäße Anlage zur Fertigung von vulkanisierten Reifen aus Reifenrohlingen umfasst eine oder mehrere Vulkanisiervorrichtungen mit zumindest je einer Vulkanisierpresse, und zumindest eine erfindungsgemäße, wie vorstehend beschriebene Vorrichtung zum Vorwärmen von Reifenrohlingen. Sie umfasst ferner eine Förder- und Übergabeeinrichtung, die dazu ausgebildet ist, die Reifenrohlinge mit der zweiten Temperatur von der Abfördervorrichtung der Vorrichtung zum Vorwärmen zu der Vulkanisierpresse der Vulkanisiervorrichtung zuzuführen und die vulkanisierten Reifen mit der vorbestimmten ersten Temperatur von der Vulkanisierpresse der Vulkanisiervorrichtung der Zufuhrvorrichtung der Vorrichtung zum Vorwärmen zuzuführen.

Ein erfindungsgemäßes Verfahren zum Vorwärmen von Reifenrohlingen verwendet gemäß einer ersten Ausführungsform eine erfindungsgemäße Vorrichtung zum Vorwärmen von Reifenrohligen.

Dabei werden Reifenrohlinge mit einer vorbestimmten ersten Temperatur, die beispielsweise im Bereich von 50 °C bis 70 °C liegt, mit einer ersten Anfördereinrichtung in die erfindungsgemäße Vorwärmkammer überführt und auf einer Transportvorrichtung mit einer Umlauflagerstrecke dem Vorwärmen überlassen.

Zugleich werden vulkanisierte Reifen mit einer vorbestimmten ersten Temperatur, die höher ist als die erste Temperatur der Reifenrohlinge (und die bspw. im Bereich von 120 bis 150 °C liegen kann), aus einer Vulkanisieranlage mit einer zweiten Anfördereinrichtung in die Vorwärmkammer gegeben und der Transportvorrichtung mit der Umlauflagerstrecke der Abgabe von Wärme überlassen.

Die Reifenrohlinge und die vulkanisierten Reifen laufen nun gemeinsam während einer Verweilzeit in der Vorwärmkammer auf der Umlauflagerstrecke, dabei erfolgt das Vorwärmen der Reifenrohlinge durch Wärme, die von den vulkanisierten Reifen abgegeben wird. Nach dem Durchlaufen der Umlauflagerstrecke während der Verweilzeit, die für die Reifenrohlinge vorbestimmt ist - wobei alle Reifenrohlinge während des Bearbeitens einer Fertigungscharge die gleiche Verweil- und damit Vorwärmzeit bekommen - werden die Reifenrohlinge mit einer zweiten Temperatur, die höher ist, als ihre erste Temperatur (und die bspw. im Bereich von 90 bis 100 °C liegen kann), auf eine erste Abfördereinrichtung zum Transport in die Vulkanisieranlage gegeben. Die vulkanisierten Reifen, die nach der Wärmeabgabe eine niedrigere zweite Temperatur haben, werden abgefördert.

Nach einer Weiterbildung des erfindungsgemäßen Verfahrens kann vorgesehen sein, dass mittels einer Steuerungsvorrichtung der Vorrichtung die Geschwindigkeit der Transportvorrichtung auf die Anfördergeschwindigkeit der Anfördereinrichtungen abgestimmt wird und eine Umlaufrichtung der Transportvorrichtung in Abhängigkeit der Positionierung des zumindest einen Ausgangs in Bezug auf den zumindest einen Eingang bestimmt wird und/oder eine oder die Anzahl der Umläufe für jeden Reifenrohling und jeden vulkanisierten Reifen in der Umlauflagerstrecke vorgegeben wird, um die vorbestimmbare Verweildauer der Reifenrohlinge und der vulkanisierten Reifen in der Vorwärmkammer zu erzielen. Weiter kann mittels der Steuerungsvorrichtung die Abstimmung einer Abfördergeschwindigkeit der Abfördereinrichtungen auf die Geschwindigkeit der Transportvorrichtung erfolgen, wobei
a) durch einen Übergabeförderabschnitt eine selektive Übergabe der Reifenrohlinge an die erste Abfördereinrichtung und der vulkanisierten Reifen an die zweite Abfördereinrichtung erfolgt,
   oder
b) eine Übergabe der Reifenrohlinge an die erste Abfördereinrichtung durch einen ersten Ausgang der Vorwärmkammer und eine Übergabe der vulkanisierten Reifen an die zweite Abfördereinrichtung durch einen zweiten Ausgang der Vorwärmkammer erfolgt.

Ein erfindungsgemäßes Verfahren zur Fertigung von vulkanisierten Reifen aus Reifenrohlingen unter Verwendung einer erfindungsgemäßen Anlage umfasst die Schritte des Zuführens der Reifenrohlinge mit einer vorbestimmten ersten Temperatur mit einer ersten Anfördereinrichtung in eine Vorwärmkammer auf eine Transportvorrichtung mit einer Umlauflagerstrecke, wobei zugleich vulkanisierte Reifen mit einer vorbestimmten ersten Temperatur, die höher ist, als die erste Temperatur der Reifenrohlinge (und die im Bereich von 120 bis 150 °C liegen kann), aus einer Vulkanisieranlage mit einer zweiten Anfördereinrichtung in die Vorwärmkammer auf die Transportvorrichtung mit der Umlauflagerstrecke zugeführt werden. Es erfolgt das umlaufend Fördern der Reifenrohlinge und der vulkanisierten Reifen gemeinsam in der Vorwärmkammer mit der Transportvorrichtung auf der Umlauflagerstrecke, wobei die Reifenrohlinge durch Wärme, die von den vulkanisierten Reifen abgegeben wird, vorgewärmt werden. Nach Durchlaufen der Umlauflagerstrecke in einer für einen Reifenrohling vorbestimmten Verweildauer gelangen die Reifenrohlinge mit einer zweiten Temperatur, die höher ist, als die erste Temperatur der Reifenrohlinge (und die im Bereich von 90 bis 100 °C liegen kann), auf eine erste Abfördereinrichtung zum Transport in die Vulkanisieranlage, und die vulkanisierten Reifen gelangen auf eine zweite Abfördereinrichtung und werden abgefördert. Das Überführen der Reifenrohlinge mit der zweiten Temperatur von der Abfördervorrichtung erfolgt mittels einer Förder- und Übergabeeinrichtung zu einer Vulkanisierpresse der Vulkanisiervorrichtung. Dort wird ein vorgewärmter Reifenrohling in der Presse vulkanisiert. Als nunmehr vulkanisierter Reifen hat er eine deutlich höhere Temperatur als vorher der Rohling und kann mittels der Förder- und Übergabeeinrichtung von der Vulkanisierpresse der Vulkanisiervorrichtung über die Zufuhrvorrichtung der Vorrichtung zum Vorwärmen weiterer Reifenrohlinge zugeführt werden.

Es ergibt sich von selbst, dass dieser an sich kontinuierlich ablaufende Fertigungsprozess, in den das Vorwärmen geschlossen und ebenfalls kontinuierlich eingebunden ist, eine gewisse Anlaufzeit benötigt, ehe die Vorwärmkammer mit genügend heißen, aus der Vulkanisiervorrichtung kommenden Reifen versorgt wird. Diese Anlaufzeit weiß der Fachmann zu berücksichtigen.

Weitere Ausführungsformen sowie einige der Vorteile, die mit diesen und weiteren Ausführungsformen verbunden sind, werden durch die nachfolgende ausführliche Beschreibung unter Bezug auf die begleitenden Figuren deutlich und besser verständlich. Gegenstände oder Teile derselben, die im Wesentlichen gleich oder ähnlich sind, können mit denselben Bezugszeichen versehen sein. Die Figuren sind lediglich eine schematische Darstellung einer Ausführungsform der Erfindung.

Dabei zeigen:
- **Fig. 1a**: eine perspektivische Ansicht einer Vorwärmvorrichtung gemäß einer erfindungsgemäßen Ausführungsform, nur mit Rahmen des Gehäuses;
- **Fig. 1b**: die Vorwärmvorrichtung gem. Fig. 1a mit thermisch isoliertem Gehäuse;
- **Fig. 2**: eine Draufsicht auf die erfindungsgemäße Anlage
- **Fig. 3**: eine schematische Draufsicht auf eine Vorwärmvorrichtung gemäß einer weiteren erfindungsgemäßen Ausführungsform,
- **Fig. 4**: eine schematische Darstellung der Temperaturen von Reifenrohlingen und vulkanisierten Reifen beim Durchlaufen der Umlauflagerstrecke.

Die erfindungsgemäße Vorrichtung bezieht sich auf eine Vorwärmvorrichtung für Reifenrohlinge, die zur Vorwärmung der Reifenrohlinge energieeffizient die Prozesswärme einer Vulkanisierpresse nutzt, indem die fertig vulkanisierten Reifen, die direkt aus der Vulkanisierpresse kommend noch eine hohe Temperatur, etwa 120 bis 150 °C, haben, zusammen mit den Reifenrohlingen, die eine niedrigere Temperatur, bspw. im Bereich von ca. 50 bis 70 °C haben können, in einer Vorwärmkammer für eine vorbestimmbare Verweildauer entlang einer Wärmeübergabestrecke, nachfolgend meist Umlauflagerstrecke genannt, geführt werden. Durch das gemeinsame Verweilen der Reifenrohlinge und der vulkanisierten Reifen in der Vorwärmkammer bei gleichzeitigem bewegt werden, so dass der Fertigungsprozess zeitökonomisch, kosteneffizient und kontinuierlich geführt werden kann, findet ein Wärmeaustausch statt, bei dem die Reifenrohlinge durch die von den vulkanisierten Reifen abgegebene Wärme auf eine Temperatur von ca. 90 bis 100 °C aufgewärmt werden.

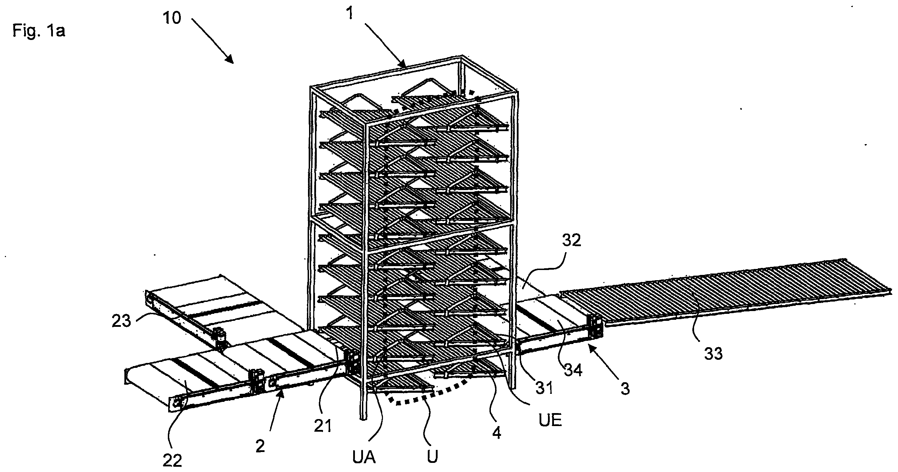

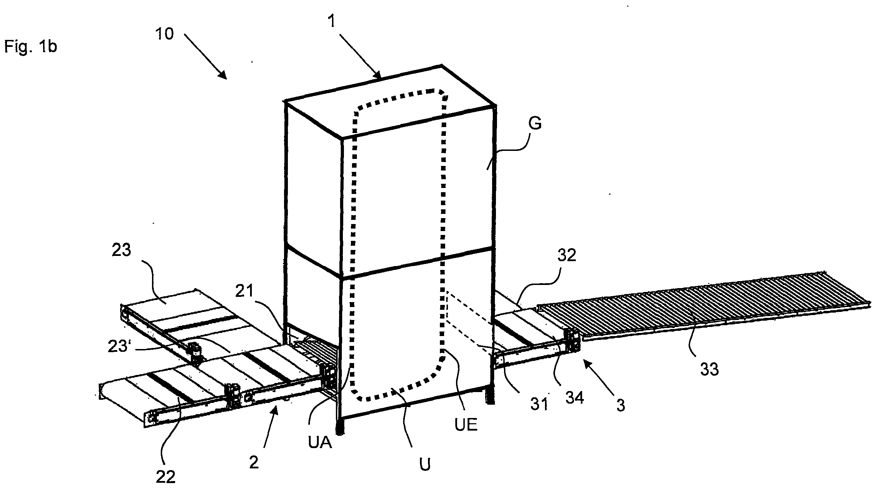

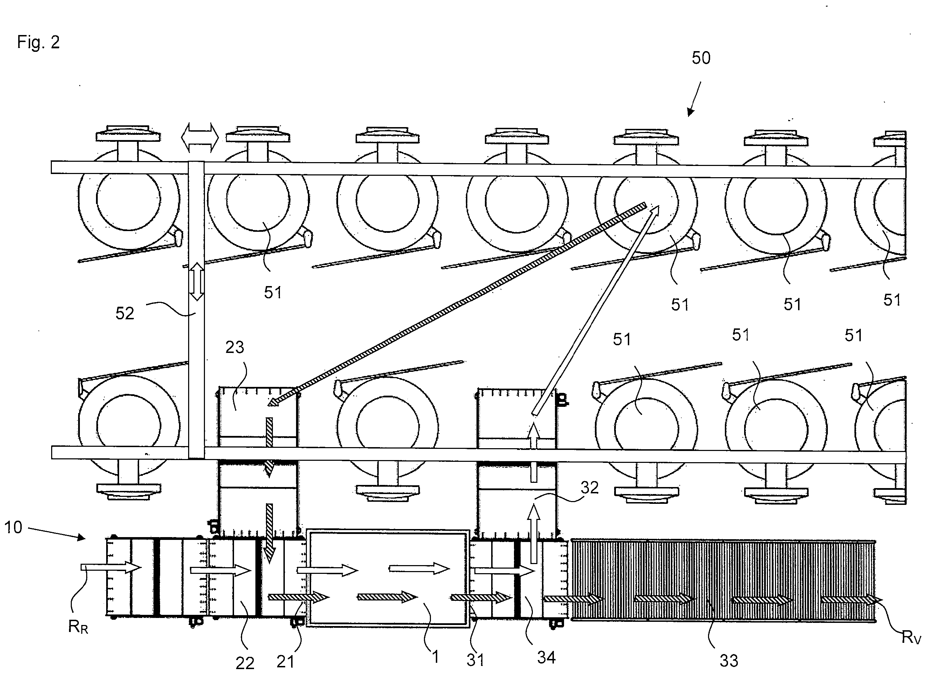

Fig. 1a und 1b zeigt eine Ausführungsform einer Vorrichtung 10 zum Vorwärmen von Reifenrohlingen, die operativ mit Vulkanisiervorrichtungen 50 mit Vulkanisierpressen 51 gekoppelt sein kann und in Verbindung mit Förder- und Übergabeeinrichtungen 52 eine erfindungsgemäße Anlage gem. Fig. 2 bildet. Je nach Größe der Vulkanisiervorrichtung, insbesondere in Abhängigkeit der Anzahl der Vulkanisierpressen, kann eine erfindungsgemäße Anlage, anders als in Fig. 2 zu sehen, auch mehr als eine Vorrichtung zum Vorwärmen von Reifenrohlingen aufweisen, damit in großen Vulkanisiervorrichtungen mit einer Vielzahl von Vulkanisierpressen die vulkanisierten Reifen nicht zu viel Wärme auf zu langen Transportwegen verlieren. Die Anzahl der erforderlichen Vorwärmvorrichtungen hängt dabei einerseits von der Anzahl der Vulkanisierpressen und andererseits von der Anzahl Förderplätze für die Reifenrohlinge und vulkanisierten Reifen auf der Umlauflagerstrecke ab. Anders gesagt, ist die Anzahl der Förderplätze für Reifenrohlinge und vulkanisierte Reifen längs der Umlauflagerstrecke in der Vorwärmkammer auf die Anzahl der Vulkanisierpressen der zugeordneten Vulkanisiervorrichtung bzw. auf die Anzahl der Vulkanisierpressen eines zugeordneten Abschnitts der Vulkanisiervorrichtung abgestimmt.

Die beispielhafte Vorrichtung 10 zum Vorwärmen von Reifenrohlingen 1 weist die Vorwärmkammer 1 auf, von der in Fig. 1a nur ein Rahmen zur besseren Darstellung der innenliegende Umlauflagerstrecke U und in Fig. 1b das thermisch isolierte Gehäuse G mit Eingang 21 und Ausgang 31 dargestellt ist.

Die Vorwärmkammer 1 hat hier einen Eingang 21 und einen Ausgang 31, kann aber, anders als hier dargestellt, je nach Art und Anzahl der Zufuhr- und Abfördervorrichtungen 2, 3 auch mehrere haben. Ein- und Ausgang 21, 31 in die Vorwärmkammer 1 können durch entsprechend platzierte und für die Reifen 12 bzw. Reifenrohlinge 11 dimensionierte Öffnungen in den Wänden der Vorwärmkammer gebildet werden. Um auch hier die Wärmeverluste aus der Vorwärmkammer 1 zu minimieren, können die Eingangs- und Ausgangsöffnungen 21, 31 z. B. mit Schleusentüren oder mit Streifenvorhängen verschließbar sein. Sollten Schleusentüren eingesetzt werden, so werden diese durch eine entsprechend abgestimmte Ansteuerung oder Regelung mittels geeigneter Sensorik von einer Steuerungsvorrichtung zum Öffnen angesteuert, wenn ein Reifenrohling 11 oder ein vulkanisierter Reifen 12 zur Überführung durch den Eingang 21 in die oder durch den Ausgang 31 aus der Vorwärmkammer 1 ankommt.

In dem in Fig. 1a gezeigten Beispiel ist die Umlaufstrecke U in der Vorwärmkammer 1 durch eine Paternosterlagervorrichtung als Transportvorrichtung bereitgestellt, die eine Vielzahl von umlaufend angetriebenen Tablaren 4 aufweist, die an einer nicht dargestellten ketten- oder bandförmigen Antriebsvorrichtung befestigt sind und im ständigen Umlaufbetrieb mit einem aufsteigenden und einem absteigenden Schleifenabschnitt bewegt werden. Die Tablaren 4 werden am oberen und unteren Wendepunkt in den jeweils anderen Schleifenabschnitt umgesetzt.

Zur Zuführung der Reifenrohlinge in die Vorwärmkammer 1 weist die Zufuhrvorrichtung 2 eine erste Anfördereinrichtung 22 auf, die sich zum Eingang 21 erstreckt. Stromaufwärts des Eingangs mündet eine zweite Anfördereinrichtung 23 direkt von der Vulkanisieranlage 50 kommend an der ersten Anfördereinrichtung 22, so dass die aus einer Vulkanisierpresse 51 geförderten vulkanisierte Reifen über die zweite Anfördereinrichtung 23 auf die erste Anfördereinrichtung 22 gelangen, mit der sie - wie die Reifenrohlinge 11 - durch den Eingang 21 in die Vorwärmkammer 1 jeweils auf eine Tablare 4 am Umlauflagerstreckenanfang UA überführt werden. Es versteht sich von selbst, dass die Anfördereinrichtungen 22, 23 und die Umlaufgeschwindigkeit der Tablaren 4 daher aufeinander abgestimmt bzw. von einer Steuerungsvorrichtung entsprechend angesteuert werden, damit die mit der ersten Anfördereinrichtung 22 angeförderten Reifenrohlinge 11 und die mit der zweiten Anfördereinrichtung 23 angeförderten vulkanisierten Reifen 12 bspw. abwechselnd in die Vorwärmkammer 1 jeweils auf eine Tablare 4 gelangen.

Anders als im dargestellten Beispiel kann die Vorrichtung 1 auch derart abgewandelt sein, dass die zweite Anfördereinrichtung 23 für die vulkanisierten Reifen 12 sich zum Eingang 21 erstreckt und die erste Anfördereinrichtung 22 für die Reifenrohlinge 11 stromaufwärts des Eingangs 21 an die zweite Anfödereinrichtung 23 anbindet.

In der Vorwärmkammer 1 werden die Reifenrohlinge 11 während des Umlaufens durch Wärme, die von den ebenfalls umlaufenden vulkanisierten Reifen 12 abgegeben wird, vorgewärmt, sodass die Reifenrohlinge 11 und die vulkanisierten Reifen 12 nach Durchlaufen der Umlauflagerstrecke U in einer vorbestimmten Verweildauer mittels eines Ausgabemechanismus (nicht dargestellt) am Umlauflagerstreckenende UE durch den Ausgang 31 auf einen Übergabeförderabschnitt 34 gelangen, der selektiv die vorgewärmten Reifenrohlinge 11 an die erste Abfördereinrichtung 32 zur Überführung in die Vulkanisiervorrichtung 50 und die abgekühlten vulkanisierten Reifen 12 an die zweite Abfördereinrichtung 33 übergibt, bei der es sich im dargestellten Beispiel um eine nicht angetriebene Rollenbahn handelt. Selbstverständlich kann hier alternativ auch eine angetriebene Abfördereinrichtung eingesetzt werden. Zur selektiven Übergabe der Reifenrohlinge 11 und der vulkanisierten Reifen 12 kann der Übergabeabschnitt 34 bzw. eine dort installierte und in den Figuren nicht dargestellte Übergabevorrichtung von der Steuerungsvorrichtung entsprechend angesteuert werden. Die Steuerungsvorrichtung kann auch zum abgestimmten Betrieb zumindest der ersten Abfördereinrichtung 32 ausgebildet sein.

Unter Steuerungsvorrichtung werden vorliegend alle Steuerungskomponenten der Vorrichtung zur Vorwärmung zusammengefasst, die für die beschriebenen Abläufe sorgen. Diese Steuerungskomponenten können in einer einzigen Steuerungsvorrichtung zusammengefasst sein, es kann sich aber auch um mehrere Steuerungskomponenten handeln, die über die Vorrichtung verteilt sind, aber miteinander kommunizieren und zusammenwirken, oder die als Regelungskomponenten mit entsprechenden Sensoren gekoppelt ggf. auch unabhängig voneinander operieren können.

In der Steuerungsvorrichtung werden in Abhängigkeit der gewünschten Verweildauer in dem Gehäuse G die Variablen Umlaufrichtung, Umlaufgeschwindigkeit der Umlauflagerstrecke U und Anzahl der Umläufe eines Reifens 12 bzw. Reifenrohlings 11 festgelegt.

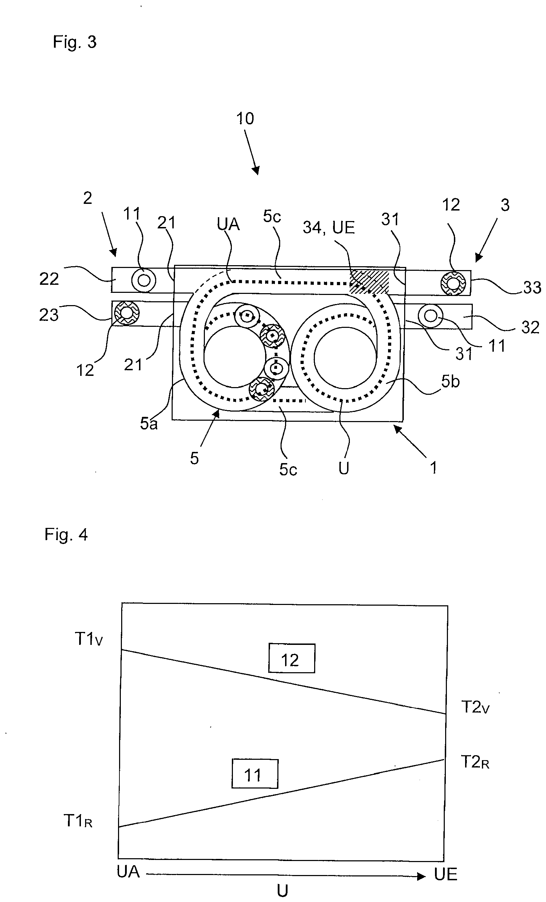

Die festgelegte Umlaufrichtung kann von der Positionierung des Ausgangs 31 in Bezug auf den Eingang 21 abhängig sein und beispielsweise so gewählt werden, dass ein möglichst langer Weg zwischen Eingang 21 und Ausgang 31 bzw. zwischen Umlauflagerstreckenanfang UA und Umlauflagerstreckenende UE zurückgelegt wird. Bei einer umlaufenden Transportvorrichtung kann das ein Teilumlauf sein, und bei einer Transportvorrichtung wie bspw. einem Förderband 5, siehe Fig. 3, eine bestimmte Strecke. Alternativ könnte die Umlaufrichtung auch während des Prozesses gewechselt werden, wenn die Reifen 12 und Reifenrohlinge 11 mehr als einen Umlauf durchlaufen bzw. eine längere Strecke /längere Verweilzeit bekommen sollen.

In Fig. 1a, 1b und 2 sind dabei weder Reifenrohlinge 11 noch vulkanisierte Reifen 12 dargestellt; die Funktionsweise der Vorrichtung 10 zur Durchführung des Verfahrens wird aber auch ohne Darstellung der Reifenrohlinge und der vulkanisierten Reifen durch die Bezeichnungen der entsprechenden Fördereinrichtungen ohne weiteres klar, zumal in Fig. 2 der Transportweg R_{R} der Reifenrohlinge 11 durch weiße Blockpfeile und der Transportweg Rv der vulkanisierten Reifen 12 durch schraffierte Blockpfeile kenntlich gemacht sind.

Zur Verdeutlichung des Weges eines Reifenrohlings/Reifens: Wie Fig. 2 zeigt, kommt der Reifenrohling 11 gemäß den Blockpfeilen R_{R} in Weiß von links über die erste Anfördervorrichtung 22, wird in der Vorwärmkammer 1 vorgewärmt, und mit Hilfe eines nicht dargestellten Ausgabemechanismus aus der Vorwärmkammer 1 durch Ausgang 31 über den Übergabeabschnitt 34 auf die Abfördereinrichtung 32 transportiert, um zur Vulkanisiervorrichtung 50 transportiert zu werden. Dort wird der vorgewärmte Reifenrohling 11 von der Abfördereinrichtung 32 mittels der Förder- und Übergabeeinrichtung 52 der Vulkanisiervorrichtung 50 von einer Steuerungsvorrichtung gesteuert in eine der Vulkanisierpressen 51 überführt, und nach erfolgter Vulkanisierung dann gemäß den schraffierten Blockpfeilen Rv als vulkanisierter Reifen 12 mit der Förder- und Übergabeeinrichtung 52 auf die zweite Anfördervorrichtung 23 aufgegeben und über die erste Anfördervorrichtung 22 in die Vorwärmkammer 1 zurückgeführt, um dort als nun vulkanisierter Reifen 12 seine überschüssige Wärme aus dem Vulkanisierprozess während der Verweildauer beim Absolvieren der Umlauflagerstrecke U zum Vorwärmen nachfolgender Reifenrohlinge 11 abzugeben, ehe er erneut durch Ausgang 31 und diesmal über die zweite Abfördervorrichtung 33 abgefördert wird. D.h., auf dem Weg vom Reifenrohling zum fertigen Reifen wird die Vorrichtung zum Vorwärmen zweimal pro Stück passiert, einmal vom Rohling, der vorgewärmt wird, und einmal vom vulkanisierten Reifen, der Wärme zum Vorwärmen weiterer Rohlinge abgibt.

Fig. 2 zeigt dabei eine Variante zur operativen Kopplung der erfindungsgemäßen Vorrichtung zur Vorwärmung von Reifenrohlingen 11 mit einer Vulkanisiervorrichtung 50, die über mehrere Vulkanisierpressen 51 in einer Gesamtanlage zur Vorwärmung und Vulkanisierung von Reifenrohlingen verfügt. Der Abschnitt des Transportwegs R_{R} eines vorgewärmten Reifenrohlings von der ersten Abfördereinrichtung 32 zu einer der Vulkanisierpressen 51 kann durch eine automatisierte Transportvorrichtung, die auch von der Steuerungsvorrichtung angesteuert werden kann, überbrückt werden. Hierzu kann beispielswiese ein Portalroboter 52 eingesetzt werden, der mit Greiforganen (nicht dargestellt) für Reifenrohlinge bzw. Reifen und einer Bewegungsmechanik (angedeutet durch die weißen Doppelblockpfeile) ausgestattet ist, um die vorgewärmten Reifenrohlinge 11 von der Abfördereinrichtung 32 zu einer freien Vulkanisierpresse 51 zu überführen. Dieselbe oder eine weitere Transportvorrichtung transportiert nach erfolgter Vulkanisierung den noch heißen vulkanisierten Reifen 12 von der jeweiligen Vulkanisierpresse 51 dem Transportweg Rv folgend zur zweiten Anfördereinrichtung 23, sodass die nach dem Vulkanisieren noch heißen Reifen 12 in die Vorwärmvorrichtung 1 gelangen und dort weitere Reifenrohlinge 11 erwärmen.

Ebenfalls nicht dargestellt, aber denkbar ist, dass zumindest die zweite Anfördereinrichtung 23 der Zufuhrvorrichtung 2 zur Minimierung des Wärmeverlusts der vulkanisierten Reifen zumindest abschnittsweise einen Tunnel aus einer thermisch isolierenden Wandung aufweist, durch den die Reifen transportiert werden. Entsprechend kann auch in der Abfördervorrichtung 3 die erste Abfördereinrichtung 32, mit der die vorgewärmten Reifenrohlinge in die Vulkanisieranlage 50 überführt werden, zumindest abschnittsweise einen Tunnel aus einer thermisch isolierenden Wandung aufweisen, um ein Abkühlen der Reifenrohlinge zwischen Gehäuse G und Vulkanisiervorrichtung 50 zu vermeiden bzw. verringern.

Fig. 3 zeigt beispielhaft schematisch eine alternative Ausführungsform einer erfindungsgemäßen Vorrichtung 10 zum Vorwärmen von Reifenrohlinge 11, die hier als weiße Ringe dargestellt sind, mittels vulkanisierter Reifen 12, die als schraffierte Ringe dargestellt sind.

Anders als in dem mit Fig. 1a, 1b und Fig. 2 gezeigten Beispiel weist die Vorwärmkammer 1 dieser Vorrichtung 10 jeweils zwei Eingänge 21 zur getrennten Zufuhr von Reifenrohlingen 11 und vulkanisierten Reifen 12 mittels der jeweiligen Anfördereinrichtung 22, 23 auf die Umlauflagerstrecke U in der Vorwärmkammer 1 auf. Die Anfördereinrichtungen 22, 23 münden hierbei an unterschiedlichen Stellen an der Umlauflagerstrecke U, die somit für Reifenrohlinge 11 und vulkanisierte Reifen 12 unterschiedliche Umlauflagerstreckenanfänge UA aufweist, von denen allerdings nur der Umlauflagerstreckenanfang UA für Reifenrohlinge 11 bezeichnet ist, da der entsprechende Umlauflagerstreckenanfang für vulkanisierte Reifen 12 von einem oberen Förderbandabschnitt 5 verdeckt ist. Im dargestellten Beispiel weist die Vorrichtung 10 auch jeweils zwei Ausgänge 31 zum getrennten Abfördern der Reifenrohlinge 11 und vulkanisierten Reifen 12 mittels der jeweiligen Abfördereinrichtung 32, 33 von der Umlaufstrecke U aus der Vorwärmkammer 1 auf.

Zum Ausschleusen der vorgewärmten Reifenrohlinge 11 auf die Abfördereinrichtung 32 ist dabei wie zum Ausschleusen der vulkanisierten Reifen 12 auf die Abfördereinrichtung 33 an den vorgesehenen Umlauflagerstreckenenden UE entlang der Umlauflagerstrecke U ein Übergabeförderplatz 34 vorgesehen, der jeweils mit einer Vorrichtung zum selektiven Ausschleusen der vorgewärmten Reifenrohlinge 11 bzw. der vulkanisierten Reifen 12 ausgestattet ist. In Fig. 3 ist ein oberer Übergabeförderplatz 34 von der Umlauflagerstrecke U an dem Umlauflagerstreckenende UE für vulkanisierte Reifen 12 auf die Abfördereinrichtung 33 schraffiert dargestellt. Der andere Übergabeförderplatz 34 auf die Abfördereinrichtung 32 bzw. das Umlauflagerstreckenende UE für die vorgewärmten Reifenrohlinge 11 ist in dieser Darstellung durch das Förderband 5 verdeckt, das in diesem Beispiel die Transportvorrichtung bildet, die die Umlauflagerstrecke U bereitstellt. Diese wird hierbei durch einen aufsteigend wendelförmigen Schleifenabschnitt 5a und einen absteigend wendelförmigen Schleifenabschnitt 5b mit jeweils einem oberen und einem unteren Verbindungsabschnitt 5c gebildet.

Obige Ausführungen in Bezug auf thermische Isolierungen, Ausbildgen der Ein- und Ausgang und der An- und Abfördereinrichtungen sowie der Steuerungsvorrichtung gelten auch hier. Eine Kopplung der Vorrichtung 10 aus Fig. 3 mit einer Vulkanisiervorrichtung zur Bildung einer Gesamtanlage sieht entsprechend vor, dass sich die Anfördereinrichtung 23 für die vulkanisierten Reifen 12 von der Vulkanisiervorrichtung erstreckt und sich die Abfördereinrichtung 32 für die vorgewärmten Reifenrohlinge 11 zu der Vulkanisiervorrichtung erstreckt.

In einer Abwandlung des in Fig. 3 gezeigten Beispiels kann die Umlauflagerstrecke anstelle eines einzigen mit geschlossenen Schleifenverlauf umlaufenden Förderbands, mit dem sowohl Reifenrohlinge als auch vulkanisierte Reifen transportiert werden, durch zwei Förderbänder bereitgestellt werden, die sich übereinander und/oder nebeneinander vorzugsweise mit zumindest einem wendelförmigen Abschnitt von dem Eingang bzw. den Eingängen durch die Vorwärmkammer zu dem Ausgang/ den Ausgängen erstrecken. Die Reifenrohlinge und die vulkanisierten Reifen werden dabei durch die Vorwärmkammer auf jeweils einem der Förderbänder transportiert, das sich von der jeweiligen Anfördereinrichtung zu der zugehörigen Abfördereinrichtung erstreckt. In einer solchen Ausführung kann auf Übergabeförderplätze mit entsprechenden Vorrichtungen oder Mechanismen zum selektiven Ausschleusen der vorgewärmten Reifenrohlinge bzw. der vulkanisierten Reifen verzichtet werden.

In weiteren Ausführungsformen der Vorwärmvorrichtung kann auch vorgesehen sein, dass eine Vorwärmkammer mit einem Eingang und einer Fig. 1 entsprechenden Zufuhrvorrichtung zwei Ausgänge zum getrennten Abfördern der vorgewärmten Reifenrohlinge und vulkanisierten Reifen mittels der jeweiligen Abfördereinrichtung aufweist. Umgekehrt können auch zwei Eingänge zur getrennten Zufuhr der Reifenrohlinge und vulkanisierten Reifen mittels der jeweiligen Anfördereinrichtung mit einem Ausgang kombiniert werden, der einen Übergabeplatz zur selektiven Übergabe der vorgewärmten Reifenrohlinge und der vulkanisierten Reifen an die jeweilige Abfördereinrichtung aufweist. Dies gilt auch für Ausführungsformen mit Paternosterumlaufstrecke.

Abweichend von dem in Fig. 1 dargestellten Paternosterlagerstrecke und der in Fig. 3 gezeigten Doppelwendeln sind auch komplexere Schleifenverläufe mit mehreren aufsteigenden und absteigenden Schleifenabschnitten sowie horizontalen und/oder wendelförmigen Schleifenabschnitten denkbar.

Fig. 4 verdeutlich in schematischer Darstellung beispielhafte Temperaturverläufe der Reifenrohlinge 11 und der vulkanisierten Reifen 12 beim Durchlaufen der Umlauflagerstrecke U vom Umlauflagerstreckenanfang UA, wo die Reifenrohlinge 11 mit der Temperatur T1_{R} und die vulkanisierten Reifen 12 mit der deutlich höheren Temperatur T1_{V} zugeführt werden, zum Umlauflagerstreckenende UE, wo die Reifenrohlinge 11, erwärmt auf eine Temperatur T2_{R}, und die vulkanisierten Reifen 12, abgekühlt auf eine Temperatur T2v, die Vorwärmvorrichtung verlassen. Die Darstellung ist nur als Verdeutlichung der Grundidee zu verstehen und nicht als Einschränkung in Bezug auf Temperaturverläufe und quantitative Temperaturverhältnisse zu verstehen. So können der Temperaturanstieg der Reifenrohlinge 11 und die Temperatursenkung der vulkanisierten Reifen 12 durchaus vom dargestellten linearen Verlauf und den dargestellten Temperaturverhältnissen abweichen.

### Bezugszeichenliste

- 1: Vorwärmvorrichtung
- 2: Zufuhrvorrichtung
- 21: Eingang
- 22: erste Anfördereinrichtung (Reifenrohlinge)
- 23: zweite Anfördereinrichtung (vulkanisierte Reifen)
- 23': Anschlussende
- 3: Abfördervorrichtung
- 31: Ausgang
- 32: erste Abfördereinrichtung (Reifenrohlinge)
- 33: zweite Abfördereinrichtung (vulkanisierte Reifen)
- 34: Übergabeförderabschnitt
- 4: Tablare
- 5: Förderband
- 5a, 5b, 5c: aufsteigender, absteigender Abschnitt, Verbindungsabschnitt
- 11: Reifenrohling
- 12: vulkanisierter Reifen
- 50: Vulkanisiervorrichtung
- 51: Vulkanisierpresse
- 52: Förder- und Übergabeeinrichtung/Portalroboter
- G: Gehäuse
- U: Umlauflagerstrecke
- UA: Umlauflagerstreckenanfang
- UE: Umlauflagerstreckenende
- R_{R}: Transportweg Reifenrohlinge
- Rv: Transportweg vulkanisierte Reifen
- T1_{R}, T2_{R}: erste, zweite Temperatur Reifenrohling
- T1_{V}, T2_{V}: erste, zweite Temperatur vulkanisierter Reifen

## Patentansprüche

1. Vorrichtung (10) zum Vorwärmen von Reifenrohlingen (11), die eine Vorwärmkammer (1) mit einem Gehäuse (G) und zumindest eine umlaufende Transportvorrichtung aufweist, die eine Umlauflagerstrecke (U) bereitstellt, wobei die Transportvorrichtung ganz oder teilweise in der Vorwärmkammer (1) angeordnet ist, und wobei
- ein Umlauflagerstreckenanfang (UA) der Umlauflagerstrecke (U) an zumindest einem Eingang (21) des Gehäuses (G) bereitgestellt und mit einer Zufuhrvorrichtung (2) operativ gekoppelt ist, und
- ein Umlauflagerstreckenende (UE) der Umlauflagerstrecke (U) an zumindest einem Ausgang (31) des Gehäuses (G) bereitgestellt und mit einer Abfördervorrichtung (3) operativ gekoppelt ist, und
- die Zufuhrvorrichtung (2) zumindest eine erste Anfördereinrichtung (22), aufweist, die dazu ausgebildet ist, über den Eingang (21) dem Umlauflagerstreckenanfang (UA) Reifenrohlinge (11) mit einer vorbestimmten ersten Temperatur (T1R) zuzuführen, und
- die Abfördervorrichtung (3) dazu ausgebildet ist, über den Ausgang (31) von dem Umlauflagerstreckenende (UE) sowohl Reifenrohlinge (11) mit einer zweiten Temperatur (T2R), die höher ist als die erste Temperatur (T1R) der Reifenrohlinge (11), als auch vulkanisierte Reifen (12) mit einer zweiten Temperatur (T2V), die niedriger ist als die erste Temperatur (T1V) der vulkanisierte Reifen (12), abzuführen,
**dadurch gekennzeichnet, dass**
die Zufuhrvorrichtung (2) zumindest eine zweite Anfördereinrichtung (23) aufweist, die dazu ausgebildet ist, vulkanisierte Reifen (12) mit einer vorbestimmten ersten Temperatur (T1V), die höher ist als die erste Temperatur (T1R) der Reifenrohlinge (11), dem Umlauflagerstreckenanfang (UA) zuzuführen

2. Vorrichtung (10) zum Vorwärmen von Reifenrohlingen (11) nach Anspruch 1, **dadurch gekennzeichnet, dass** das Gehäuse (G) thermisch isoliert ist.

3. Vorrichtung (10) zum Vorwärmen von Reifenrohlingen (11) nach Anspruch 1 oder 2, **dadurch gekennzeichnet, dass**
- die zumindest eine erste Anfördereinrichtung (22) an den Eingang (21) angrenzt und die zumindest eine zweite Anfördereinrichtung (23) an einem Anschlussende (23') desselben an die erste Anfördereinrichtung (22) anschließt, oder umgekehrt, und wobei
- die Abfördervorrichtung (3) zumindest eine erste Abfördereinrichtung (32) für die Reifenrohlinge (11) mit der zweiten Temperatur (T2R) und zumindest eine zweite Abfördereinrichtung (33) für die vulkanisierten Reifen mit der zweiten Temperatur (T2V) aufweist.

4. Vorrichtung (10) zum Vorwärmen von Reifenrohlingen (11) nach Anspruch 1 oder 2, **dadurch gekennzeichnet, dass**
- - die zumindest eine erste Anfördereinrichtung (22) sich durch den Eingang (21) hindurch in das Gehäuse (G) erstreckt und in dem Gehäuse (G) die Transportvorrichtung bildet, die die Umlauflagerstrecke (U) bereitstellt, und sich durch den Ausgang (31) aus dem Gehäuse heraus erstreckt und eine erste Abfördereinrichtung (32) bildet, und/oder
- - die zumindest eine zweite Anfördereinrichtung (23) sich durch den Eingang (21) hindurch in das Gehäuse (G) erstreckt und in dem Gehäuse (G) die Transportvorrichtung bildet, die die Umlauflagerstrecke (U) bereitstellt, und sich durch den Ausgang (31) aus dem Gehäuse heraus erstreckt und eine zweite Abfördereinrichtung (32) bildet.

5. Vorrichtung (10) nach Anspruch 3, **dadurch gekennzeichnet, dass** die Abfördervorrichtung (3) einen Übergabeförderabschnitt (34) aufweist, wobei die erste Abfördereinrichtung (32) und die zweite Abfördereinrichtung (33) über den Übergabeförderabschnitt (34) an den Ausgang (31) angeschlossen sind, oder die Vorwärmkammer (1) jeweils einen Ausgang (31) zu der ersten und der zweiten Abfördereinrichtung (32, 33) aufweist, wobei die Umlauflagerstrecke (U) für jede Abfördereinrichtung (32, 33) jeweils einen zugeordneten Übergabeförderabschnitt (34) aufweist.

6. Vorrichtung (10) nach Anspruch zumindest einem der Ansprüche 1 bis 5, **dadurch gekennzeichnet, dass** die Umlauflagerstrecke (U) der Transportvorrichtung in der Vorwärmkammer (1) einen Schleifenverlauf mit horizontalen, vertikalen und/oder wendelförmigen Schleifenabschnitten aufweist.

7. Vorrichtung (10) nach zumindest einem der Ansprüche 1 bis 6, **dadurch gekennzeichnet, dass** die Transportvorrichtung, die die Umlauflagerstrecke (U) bereitstellt, durch eine Paternostervorrichtung mit einer Vielzahl von Tablaren (4) gebildet wird, die umlaufend in einem Schleifenverlauf angetrieben werden, der horizontale und vertikale Schleifenabschnitte und/oder zumindest einen aufsteigenden wendelförmig und einen absteigend wendelförmigen Schleifenabschnitt aufweist.

8. Vorrichtung (10) nach zumindest einem der Ansprüche 1 bis 6, **dadurch gekennzeichnet, dass** die Transportvorrichtung, die die Umlauflagerstrecke (U) bereitstellt, durch zumindest ein Förderband (5) gebildet wird, das zumindest einen aufsteigend wendelförmigen Schleifenabschnitt (5a, 5b) aufweist und bevorzugt einen aufsteigend wendelförmigen Schleifenabschnitt (5a, 5b) und einen absteigend wendelförmigen Schleifenabschnitt (5a, 5b) aufweist.

9. Vorrichtung (10) nach zumindest einem der Ansprüche 1 bis 8, **dadurch gekennzeichnet, dass** die Vorrichtung (10) eine Steuerungsvorrichtung aufweist, die zur Steuerung der zumindest jeweils einen Transportvorrichtung, Zufuhrvorrichtung (2), Abfördervorrichtung (3) ausgebildet ist, so dass
- - eine Geschwindigkeit der Transportvorrichtung, die die Umlauflagerstrecke (U) bereitstellt, auf die Anfördergeschwindigkeit der Anfördereinrichtungen (22, 23) abstimmbar ist; und
- - eine Umlaufrichtung der Umlauflagerstrecke (U) in Abhängigkeit der Positionierung des zumindest einen Ausgangs (31) in Bezug auf den zumindest einen Eingang (21) und/oder eine Anzahl der Umläufe für jeden Reifenrohling und jeden vulkanisierten Reifen in der Umlauflagerstrecke (U) wählbar ist, um eine vorbestimmbare Verweildauer der Reifenrohlinge und der vulkanisierten Reifen in der Vorwärmkammer (1) zu erzielen; und
- - die Reifenrohlinge und die vulkanisierten Reifen nach der vorbestimmten Verweildauer von der Umlaufstrecke (S) aus der Vorwärmkammer (1) ausschleusbar sind; und
- - eine Abfördergeschwindigkeit der Abfördereinrichtungen (32,33) auf die Geschwindigkeit der Transportvorrichtung abstimmbar ist, wobei bevorzugt die Steuerungsvorrichtung ferner zur Steuerung des Übergabeförderabschnitts (34) ausgebildet ist.

10. Anlage zur Fertigung von vulkanisierten Reifen aus Reifenrohlingen (11), **umfassend zumindest** eine Vulkanisiervorrichtung (50) mit zumindest einer Vulkanisierpresse (51), und eine Vorrichtung (10) zum Vorwärmen von Reifenrohlingen (11) nach zumindest einem der Ansprüche 1 bis 9, und eine Förder- und Übergabeeinrichtung (52), die dazu ausgebildet ist, die Reifenrohlinge (11) mit der zweiten Temperatur (T2R) von der Abfördervorrichtung (3) der Vorrichtung (10) zum Vorwärmen zu der Vulkanisierpresse (51) zuzuführen und die vulkanisierten Reifen (12) mit der vorbestimmten ersten Temperatur (T1V) von der Vulkanisierpresse (51) zu der Zufuhrvorrichtung (2) der Vorrichtung (10) zum Vorwärmen zuzuführen.

11. Verfahren zum Vorwärmen von Reifenrohlingen (11) unter Verwendung einer Vorrichtung (10) nach zumindest einem der Ansprüche 1 bis 9, **umfassend die Schritte**
- Zuführen der Reifenrohlinge (11) mit einer vorbestimmten ersten Temperatur (T1R)
- mit einer ersten Anfördereinrichtung (22) in eine Vorwärmkammer (1) auf eine Transportvorrichtung mit einer Umlauflagerstrecke (U), dabei zugleich
- Zuführen von vulkanisierten Reifen (12) mit einer vorbestimmten ersten Temperatur (T1V), die höher ist als die erste Temperatur (T1R) der Reifenrohlinge (11) aus einer Vulkanisiervorrichtung (50), mit einer zweiten Anfördereinrichtung (23) in die Vorwärmkammer (1) auf die Transportvorrichtung mit der Umlauflagerstrecke (U),
- umlaufend Fördern der Reifenrohlinge (11) und der vulkanisierten Reifen (12) gemeinsam in der Vorwärmkammer (1) mit der Transportvorrichtung auf der Umlauflagerstrecke (U), dabei
- Vorwärmen der Reifenrohlinge (11) durch Wärme, die von den vulkanisierten Reifen abgegeben wird,
- nach Durchlaufen der Umlauflagerstrecke (U) in einer für einen Reifenrohling (11) vorbestimmten Verweildauer Überführen der Reifenrohlinge (11) mit einer zweiten Temperatur (T2R), die höher ist als die erste Temperatur (T1R) der Reifenrohlinge (11), auf eine erste Abfördereinrichtung (32) zum Transport in die Vulkanisiervorrichtung (50), und der vulkanisierten Reifen auf eine zweite Abfördereinrichtung (33), wobei die vulkanisierten Reifen (12) mit einer zweiten Temperatur (T2V), die niedriger ist als die erste Temperatur (T1V) der vulkanisierte Reifen (12), abgefördert werden.

12. Verfahren nach Anspruch 11, wobei mittels einer Steuerungsvorrichtung der Vorrichtung (10)
- eine Abstimmung einer Geschwindigkeit der Transportvorrichtung auf die Anfördergeschwindigkeit der Anfördereinrichtungen (22, 23) erfolgt; und
- eine Bestimmung einer Umlaufrichtung der Transportvorrichtung in Abhängigkeit der Positionierung des zumindest einen Ausgangs (31) in Bezug auf den zumindest einen Eingang (21) und/oder einer Anzahl der Umläufe für jeden Reifenrohling und jeden vulkanisierten Reifen in der Umlauflagerstrecke (U) durchgeführt wird, um die vorbestimmbare Verweildauer der Reifenrohlinge und der vulkanisierten Reifen in der Vorwärmkammer (1) zu erzielen; und
- eine Abstimmung einer Abfördergeschwindigkeit der Abfördereinrichtungen (32, 33) auf die Geschwindigkeit der Transportvorrichtung erfolgt, wobei
a) durch einen Übergabeförderabschnitt (34) eine selektive Übergabe der Reifenrohlinge an die erste Abfördereinrichtung (32) und der vulkanisierten Reifen an die zweite Abfördereinrichtung (33) erfolgt,
oder
b) eine Übergabe der Reifenrohlinge an die erste Abfördereinrichtung (32) durch einen ersten Ausgang (31) der Vorwärmkammer (1) und eine Übergabe der vulkanisierten Reifen an die zweite Abfördereinrichtung (33) durch einen zweiten Ausgang (31) der Vorwärmkammer (1) erfolgt.

13. Verfahren zur Fertigung von vulkanisierten Reifen (12) aus Reifenrohlingen (11) unter Verwendung einer Anlage nach Anspruch 10, **umfassend die Schritte**
- Zuführen der Reifenrohlinge (11) mit einer vorbestimmten ersten Temperatur (T1_{R}) mit einer ersten Anfördereinrichtung (22) in eine Vorwärmkammer (1) auf eine Transportvorrichtung mit einer Umlauflagerstrecke (U), dabei ebenfalls
- Zuführen von vulkanisierten Reifen (12) mit einer vorbestimmten ersten Temperatur (T1V), die höher ist als die erste Temperatur (T1R) der Reifenrohlinge (11), aus einer Vulkanisiervorrichtung (50) mit einer zweiten Anfördereinrichtung (23) in die Vorwärmkammer (1) auf die Transportvorrichtung mit der Umlauflagerstrecke (U),
- umlaufend Fördern der Reifenrohlinge (11) und der vulkanisierten Reifen (12) gemeinsam in der Vorwärmkammer (1) mit der Transportvorrichtung auf der Umlauflagerstrecke (U), dabei
- Vorwärmen der Reifenrohlinge (11) durch Wärme, die von den vulkanisierten Reifen (12) abgegeben wird,
- nach Durchlaufen der Umlauflagerstrecke (U) in einer für einen Reifenrohling (11) vorbestimmten Verweildauer Überführen der Reifenrohlinge (11) mit einer zweiten Temperatur (T2R), die höher ist als die erste Temperatur (T1R) der Reifenrohlinge (11), auf eine erste Abfördereinrichtung (32) zum Transport in die Vulkanisiervorrichtung (50) und der vulkanisierten Reifen auf eine zweite Abfördereinrichtung (33), wobei die vulkanisierten Reifen (12) mit einer zweiten Temperatur (T2V), die niedriger ist als die erste Temperatur (T1V) der vulkanisierte Reifen (12), abgeführt werden,
- Überführen der Reifenrohlinge (11) mit der zweiten Temperatur (T2R) von der Abfördervorrichtung (3) mittels der Förder- und Übergabeeinrichtung (52) zu der Vulkanisierpresse (51) der Vulkanisiervorrichtung (50) und
- Vulkanisieren des vorgewärmten Reifenrohlings (11) in der Vulkanisierpresse (51) zu dem vulkanisierten Reifen (12) und Überführen der vulkanisierten Reifen (12) mit der vorbestimmten ersten Temperatur (T1V) von der Presse (51) der Vulkanisiervorrichtung (50) mittels der Förder- und Übergabeeinrichtung (52) zu der Zufuhrvorrichtung (2) der Vorrichtung (10) zum Vorwärmen.

## Claims

1. A device (10) for preheating tire blanks (11), having a preheating chamber (1) with a housing (G) and at least one continuous conveying device which provides a carousel storage track (U), wherein the conveying device is arranged completely or partially inside the preheating chamber (1), and wherein
- a carousel storage track start (UA) of the carousel storage track (U) is provided at at least one inlet (21) of the housing (G) and is operatively coupled to a feed device (2), and
- a carousel storage track end (UE) of the carousel storage track (U) is provided at at least one outlet (31) of the housing (G) and is operatively coupled to an outward-conveying device (3), and
- the feed device (2) has at least one first inward-conveying unit (22) designed to deliver tire blanks (11) with a predetermined first temperature (T1R) to the carousel storage track start (UA) via the inlet (21), and
- the outward-conveying device (3) is designed to discharge both tire blanks (11) with a second temperature (T2R) higher than the first temperature (T1R) of the tire blanks (11), and vulcanized tires (12) with a second temperature (T2V) lower than the first temperature (T1V) of the vulcanized tires (12), via the outlet (31) of the carousel storage track end (UE),
**characterized in that**
the feed device (2) has at least one second inward-conveying unit (23) designed to deliver vulcanized tires (12) to the carousel storage track start (UA) with a predetermined first temperature (T1V) which is higher than the first temperature (T1R) of the tire blanks (11).

2. The device (10) for preheating tire blanks (11) according to claim 1, **characterized in that** the housing (G) is thermally insulated.

3. The device (10) for preheating tire blanks (11) according to claim 1 or 2, **characterized in that**
- the at least one first inward-conveying unit (22) adjoins the inlet (21) and the at least one second inward-conveying unit (23) connects at a connection end (23') of the latter to the first inward-conveying unit (22), or vice versa, and wherein
- the outward-conveying device (3) has at least one first outward-conveying unit (32) for the tire blanks (11) with the second temperature (T2R) and at least one second outward-conveying unit (33) for the vulcanized tires with the second temperature (T2V).

4. The device (10) for preheating tire blanks (11) according to claim 1 or 2, **characterized in that**
- - the at least one first inward-conveying unit (22) also extends through the inlet (21) into the housing (G) and forms inside the housing (G) the conveying device that provides the carousel storage track (U) and extends through the outlet (31) and out of the housing and forms a first outward-conveying unit (32), and/or
- - the at least one second inward-conveying unit (23) extends through the inlet (21) into the housing (G) and forms inside the housing (G) the conveying device that provides the carousel storage track (U), and extends through the outlet (31) and out of the housing and forms a second outward-conveying unit (32).

5. The device (10) according to claim 3, **characterized in that** the outward-conveying device (3) has a transfer-conveying section (34), wherein the first outward-conveying unit (32) and the second outward-conveying unit (33) are connected to the outlet (31) via the transfer-conveying section (34), or the preheating chamber (1) has one outlet (31) respectively to the first and the second outward-conveying units (32, 33), wherein the carousel storage track (U) has an associated transfer-conveying section (34) for each outward-conveying unit (32, 33).

6. The device (10) according to at least one of claims 1 to 5, **characterized in that** the carousel storage track (U) of the conveying device inside the preheating chamber (1) has a looping course with horizontal, vertical and/or spiral looped sections.

7. The device (10) according to at least one of claims 1 to 6, **characterized in that** the conveying device providing the carousel storage track (U) is formed by a paternoster device having a plurality of trays (4) driven continuously in a looping course which can have horizontal and vertical looped sections and/or at least one spirally ascending and one spirally descending looped section.

8. The device (10) according to at least one of claims 1 to 6, **characterized in that** the conveying device providing the carousel storage track (U) is formed by at least one conveyor belt (5) having at least one spirally ascending looped section (5a, 5b), and preferably one spirally ascending looped section (5a, 5b) and one spirally descending looped section (5a, 5b).

9. The device (10) according to at least one of claims 1 to 8, **characterized in that** the device (10) has a control device designed for controlling the at least one conveying device, feed device (2) and outward-conveying device (3) respectively, such that
- - a speed of the conveying device providing the carousel storage track (U) is matchable to the delivery speed of the inward-conveying units (22, 23); and
- - a circulation direction of the carousel storage track (U) is selectable depending on the positioning of the at least one outlet (31) in relation to the at least one inlet (21) and/or a number of circuits for every tire blank and every vulcanized tire in the carousel storage track (U), in order to achieve a predeterminable dwell time of the tire blanks and vulcanized tires inside the preheating chamber (1); and
- - the tire blanks and the vulcanized tires are dischargeable from the carousel track (S) out of the preheating chamber (1) after the predetermined dwell time; and
- - a discharge speed of the outward-conveying units (32, 33) is matchable to the speed of the conveying device, wherein the control device is preferably further designed to control the transfer-conveying section (34).

10. A system for producing vulcanized tires from tire blanks (11), **comprising at least** one vulcanizing device (50) with at least one vulcanizing press (51), and a device (10) for preheating tire blanks (11) according to at least one of claims 1 to 9, and a conveying and transfer unit (52) designed to supply the tire blanks (11) with the second temperature (T2R) from the outward-conveying device (3) of the preheating device (10) to the vulcanizing press (51), and the vulcanized tires (12) with the predetermined first temperature (T1V) from the vulcanizing press (51) to the feed device (2) of the preheating device (10).

11. A method for preheating tire blanks (11) using a device (10) according to at least one of claims 1 to 9, **comprising the steps**
- supplying the tire blanks (11) with a predetermined first temperature (T1R)
- with a first inward-conveying unit (22) into a preheating chamber (1) onto a conveying device with a carousel storage track (U), and at the same time
- supplying vulcanized tires (12) with a predetermined first temperature (T1V) which is higher than the first temperature (T1R) of the tire blanks (11) from a vulcanizing device (50) with a second inward-conveying unit (23) into the preheating chamber (1) onto the conveying device with the carousel storage track (U),
- continuous conveying of the tire blanks (11) and vulcanized tires (12) jointly inside the preheating chamber (1) with the conveying device on the carousel storage track (U), with
- preheating of the tire blanks (11) by heat emitted by the vulcanized tires,
- after passage through the carousel storage track (U) in a dwell time predetermined for a tire blank (11), passing of the tire blanks (11) with a second temperature (T2R) higher than the first temperature (T1R) of the tire blanks (11) onto a first outward-conveying unit (32) for conveying into the vulcanizing device (50), and of the vulcanized tires onto a second outward-conveying unit (33), wherein the vulcanized tires (12) are discharged with a second temperature (T2V) lower than the first temperature (T1V) of the vulcanized tires (12).

12. The method according to claim 11, wherein by means of a control device of the device (10)
- a speed of the conveying device is matched to the delivery speed of the inward-conveying units (22, 23); and
- a circulation direction of the conveying device is determined depending on the positioning of the at least one outlet (31) in relation to the at least one inlet (21) and/or a number of circuits for every tire blank and every vulcanized tire in the carousel storage track (U), in order to achieve the predeterminable dwell time of the tire blanks and vulcanized tires inside the preheating chamber (1); and
- a discharge speed of the outward-conveying units (32, 33) is matched to the speed of the conveying device, wherein
a) a selective transfer of the tire blanks to the first outward-conveying unit (32) and of the vulcanized tires to the second outward-conveying unit (33) is achieved by one transfer-conveying section (34),
or
b) a transfer of the tire blanks to the first outward-conveying unit (32) takes place through a first outlet (31) of the preheating chamber (1), and a transfer of the vulcanized tires to the second outward-conveying unit (33) takes place through a second outlet (31) of the preheating chamber (1).

13. A method for producing vulcanized tires (12) from tire blanks (11) using a system according to claim 10, **comprising the steps**
- supplying the tire blanks (11) with a predetermined first temperature (T1_{R}) with a first inward-conveying unit (22) into a preheating chamber (1) onto a conveying device with a carousel storage track (U), and also
- supplying vulcanized tires (12) with a predetermined first temperature (T1V) which is higher than the first temperature (T1R) of the tire blanks (11) from a vulcanizing device (50) with a second inward-conveying unit (23) into the preheating chamber (1) onto the conveying device with the carousel storage track (U),
- continuous conveying of the tire blanks (11) and vulcanized tires (12) jointly inside the preheating chamber (1) with the conveying device on the carousel storage track (U), with
- preheating of the tire blanks (11) by heat emitted by the vulcanized tires (12),
- after passage through the carousel storage track (U) in a dwell time predetermined for a tire blank (11), passing of the tire blanks (11) with a second temperature (T2R) higher than the first temperature (T1R) of the tire blanks (11) onto a first outward-conveying unit (32) for conveying into the vulcanizing device (50), and of the vulcanized tires onto a second outward-conveying unit (33), wherein the vulcanized tires (12) are discharged with a second temperature (T2V) lower than the first temperature (T1V) of the vulcanized tires (12),
- passing of the tire blanks (11) with a second temperature (T2R) from the outward-conveying device (3) by means of the conveying and transfer unit (52) to the vulcanizing press (51) of the vulcanizing device (50) and
- vulcanizing the preheated tire blank (11) in the vulcanizing press (51) to the vulcanized tire (12) and passing the vulcanized tire (12) with the predetermined first temperature (T1V) from the press (51) of the vulcanizing device (50) to the feed device (2) of the device (10) for preheating by means of the conveying and transfer unit (52).

## Revendications

1. Dispositif (10) pour préchauffer des pneumatiques crus (11), qui présente une chambre de préchauffe (1) avec un bâti (G) et au moins un dispositif de transport circulaire qui dessert un circuit dans un carrousel de stockage (U), sachant que le dispositif de transport est disposé entièrement ou partiellement dans la chambre de préchauffe (1), et sachant
- qu'un début (UA) du circuit dans le carrousel de stockage (U) existe au niveau d'au moins une entrée (21) du bâti (G) et est couplé de manière opérationnelle à un dispositif d'alimentation (2), et
- qu'une fin (UE) du circuit dans le carrousel de stockage (U) existe au niveau d'au moins une sortie (31) du bâti (G) et est couplée de manière opérationnelle à un dispositif d'évacuation (3), et
- le dispositif d'alimentation (2) présente au moins un premier convoyeur de chargement (22) qui est conçu pour distribuer, au début du circuit dans le carrousel de stockage (UA) via l'entrée (21), des pneumatiques crus (11) à une première température (T1R) prédéfinie, et
- le dispositif d'évacuation (3) est conçu pour évacuer via la sortie (31) de la fin du circuit dans le carrousel de stockage (UE) aussi bien des pneumatiques crus (11) à une deuxième température (T2R) supérieure à la première température (T1R) des pneumatiques crus (11) que des pneumatiques vulcanisés (12) à une deuxième température (T2V) inférieure à la première température (T1V) des pneumatiques vulcanisés (12),
**caractérisé en ce que**
le dispositif d'alimentation (2) présente au moins un deuxième convoyeur de chargement (23) qui est conçu pour distribuer au début du circuit dans le carrousel de stockage (UA) des pneumatiques vulcanisés (12) à une première température prédéfinie (T1V) supérieure à la première température (T1R) des pneumatiques crus (11).

2. Dispositif (10) servant à préchauffer les pneumatiques crus (11) selon la revendication 1, **caractérisé en ce que** le bâti (G) est isolé thermiquement.

3. Dispositif (10) servant à préchauffer des pneumatiques crus (11) selon la revendication 1 ou 2, **caractérisé en ce que**
- ledit au moins un premier convoyeur de chargement (22) avoisine l'entrée (21) et que ledit au moins un deuxième convoyeur de chargement (23) succède au premier convoyeur de chargement (22) au niveau d'une extrémité de connexion (23') de celui-ci, ou inversement, et sachant que
- le dispositif d'évacuation (3) présente au moins un premier convoyeur d'évacuation (32) pour les pneumatiques crus (11) à la deuxième température (T2R) et au moins un deuxième convoyeur d'évacuation (33) pour les pneumatiques vulcanisés à une deuxième température (T2V).

4. Dispositif (10) servant à préchauffer des pneumatiques crus (11) selon la revendication 1 ou 2, **caractérisé en ce que**
- - ledit au moins un premier convoyeur de chargement (22) s'étend à travers l'entrée (21) jusque dans le bâti (G) et forme dans le bâti (G) le dispositif de transport qui dessert le circuit dans le carrousel de stockage (U), et s'étend à travers la sortie (31) pour sortir du bâti et forme un premier convoyeur d'évacuation (32), et/ou
- - ledit au moins un deuxième convoyeur de chargement (23) s'étend à travers l'entrée (21) jusque dans le bâti (G) et forme dans le bâti (G) le dispositif de transport qui dessert le circuit dans le carrousel de stockage (U), et s'étend à travers la sortie (31) pour sortir du bâti et forme un deuxième convoyeur d'évacuation (32).

5. Dispositif (10) selon la revendication 3, **caractérisé en ce que** le dispositif d'évacuation (3) présente une section de transfert (34), sachant que le premier convoyeur d'évacuation (32) et le deuxième convoyeur d'évacuation (33) sont connectés à la sortie (31) via la section de transfert (34), ou que la chambre de préchauffe (1) présente respectivement une sortie (31) vers le premier et le deuxième convoyeur d'évacuation (32, 33), sachant que le circuit dans le carrousel de stockage (U) présente pour chaque convoyeur d'évacuation (32, 33) respectivement une section de transfert (34) associée.

6. Dispositif (10) selon au moins l'une des revendications 1 à 5, **caractérisé en ce que** le circuit dans le carrousel de stockage (U) du dispositif de transport dans la chambre de préchauffe (1) présente un tracé en boucle avec des sections de boucle horizontales, verticales et/ou hélicoïdales.

7. Dispositif (10) selon au moins l'une des revendications 1 à 6, **caractérisé en ce que** le dispositif de transport qui dessert le circuit dans le carrousel de stockage (U) est formé par un dispositif paternoster avec une pluralité de plateaux (4) qui sont entraînés circulairement dans un tracé en boucle, qui présente des sections de boucle horizontales et verticales et/ou au moins une section de boucle hélicoïdale montante et une section de boucle hélicoïdale descendante.

8. Dispositif (10) selon au moins l'une des revendications 1 à 6, **caractérisé en ce que** le dispositif de transport qui dessert le circuit dans le carrousel de stockage (U) est formé par au moins un convoyeur à bande (5) qui présente au moins une section de boucle hélicoïdale montante (5a, 5b) et de préférence, une section de boucle hélicoïdale montante (5a, 5b) et une section de boucle hélicoïdale descendante (5a, 5b).

9. Dispositif (10) selon au moins l'une des revendications 1 à 8, **caractérisé en ce que** le dispositif (10) présente un dispositif de commande qui est conçu pour commander respectivement ledit au moins un dispositif de transport, dispositif d'alimentation (2), dispositif d'évacuation (3) de sorte
- - qu'une vitesse du dispositif de transport qui dessert le circuit dans le carrousel de stockage (U) est adaptable à la vitesse de chargement des convoyeurs de chargement (22, 23) ; et
- - qu'un sens de circulation du circuit dans le carrousel de stockage (U) est sélectionnable en fonction du positionnement de ladite au moins une sortie (31) par rapport à ladite au moins une entrée (21) et/ou un nombre de tours est sélectionnable pour chaque pneumatique cru et chaque pneumatique vulcanisé dans le circuit dans le carrousel de stockage (U) pour atteindre une durée de séjour prédéfinie des pneumatiques crus et des pneumatiques vulcanisés dans la chambre de préchauffe (1) ; et
- - que les pneumatiques crus et les pneumatiques vulcanisés sont évacuables du circuit circulaire (S) hors de la chambre de préchauffe (1) après la durée de séjour prédéfinie ; et
- - que la vitesse d'évacuation des convoyeurs d'évacuation (32, 33) est adaptable à la vitesse du dispositif de transport, sachant que de préférence, le dispositif de commande est conçu également pour commander la section de transfert (34).

10. installation de fabrication de pneumatiques vulcanisés à partir de pneumatiques crus (11), **comprenant au moins** un dispositif de vulcanisation (50) avec au moins une presse à vulcaniser (51), et un dispositif (10) servant à préchauffer les pneumatiques crus (11) selon au moins l'une des revendications 1 à 9, et un dispositif de convoyage et de transfert (52) qui est conçu pour distribuer les pneumatiques crus (11) à la deuxième température (T2R), provenant du dispositif d'évacuation (3) du dispositif (10) servant à préchauffer, à la presse à vulcaniser (51) et les pneumatiques vulcanisés (12) à une première température prédéfinie (T1V), provenant de la presse à vulcaniser (51), au dispositif d'alimentation (2) du dispositif (10) servant à préchauffer.

11. Procédé de préchauffe de pneumatiques crus (11) utilisant un dispositif (10) selon au moins l'une des revendications 1 à 9, **comprenant les étapes suivantes**
- distribution des pneumatiques crus (11) à une première température prédéfinie (T1R)
- avec un premier convoyeur de chargement (22) dans une chambre de préchauffe (1) sur un dispositif de transport avec un circuit dans le carrousel de stockage (U), et simultanément
- distribution de pneumatiques vulcanisés (12) à une première température prédéfinie (T1V) supérieure à la première température (T1R) des pneumatiques crus (11) provenant d'un dispositif de vulcanisation (50), avec un deuxième convoyeur de chargement (23) dans la chambre de préchauffe (1) sur le dispositif de transport avec le circuit dans le carrousel de stockage (U),
- convoyage circulaire des pneumatiques crus (11) et des pneumatiques vulcanisés (12) ensemble dans la chambre de préchauffe (1) avec le dispositif de transport sur le circuit dans le carrousel de stockage (U), pendant ce processus,
- préchauffe des pneumatiques crus (11) par la chaleur qui se dégage des pneumatiques vulcanisés,
- après traversée du circuit dans le carrousel de stockage (U) pendant une durée de séjour prédéfinie pour un pneumatique cru (11), transfert des pneumatiques crus (11) à une deuxième température (T2R) supérieure à la première température (T1R) des pneumatiques crus (11), sur un premier convoyeur d'évacuation (32) pour le transport dans le dispositif de vulcanisation (50), et des pneumatiques vulcanisés sur un deuxième convoyeur d'évacuation (33), sachant que les pneumatiques vulcanisés (12) sont évacués à une deuxième température (T2V) qui est inférieure à la première température (T1V) des pneumatiques vulcanisés (12).

12. Procédé selon la revendication 11, dans lequel, au moyen d'un dispositif de commande du dispositif (10),
- a lieu une adaptation d'une vitesse du dispositif de transport à la vitesse de chargement des convoyeurs de chargement (22, 23) ; et
- une détermination d'un sens de circulation du dispositif de transport en fonction du positionnement de ladite au moins une sortie (31) par rapport à ladite au moins une entrée (21) et/ou un nombre de tours pour chaque pneumatique cru et chaque pneumatique vulcanisé dans le circuit dans le carrousel de stockage (U) pour atteindre la durée de séjour prédéfinie des pneumatiques crus et des pneumatiques vulcanisés dans la chambre de préchauffe (1) ; et
- a lieu une adaptation d'une vitesse d'évacuation des convoyeurs d'évacuation (32, 33) à la vitesse du dispositif de transport, sachant
a) qu'a lieu, par une section de transfert (34), un transfert sélectif des pneumatiques crus au premier convoyeur d'évacuation (32) et des pneumatiques vulcanisés au deuxième convoyeur d'évacuation (33),
ou
b) qu'a lieu un transfert des pneumatiques crus au premier dispositif d'évacuation (32) à travers une première sortie (31) de la chambre de préchauffe (1) et un transfert des pneumatiques vulcanisés au deuxième convoyeur d'évacuation (33) à travers une seconde sortie (31) de la chambre de préchauffe (1).

13. Procédé de fabrication des pneumatiques vulcanisés (12) à partir de pneumatiques crus (11) en utilisant une installation selon la revendication 10, **comprenant les étapes suivantes**
- distribution des pneumatiques crus (11) à une première température prédéfinie (T1_{R}) avec un premier convoyeur de chargement (22) dans une chambre de préchauffe (1) sur un dispositif de transport avec un circuit dans le carrousel de stockage (U), et également, pendant ce processus,
- distribution de pneumatiques vulcanisés (12) à une première température prédéfinie (T1V) supérieure à la première température (T1R) des pneumatiques crus (11) provenant d'un dispositif de vulcanisation (50), avec un deuxième convoyeur de chargement (23) dans la chambre de préchauffe (1) sur le dispositif de transport avec le circuit dans le carrousel de stockage (U),
- convoyage circulaire des pneumatiques crus (11) et des pneumatiques vulcanisés (12) ensemble dans la chambre de préchauffe (1) avec le dispositif de transport sur le circuit dans le carrousel de stockage (U), pendant ce processus,
- préchauffe des pneumatiques crus (11) par la chaleur qui se dégage des pneumatiques vulcanisés (12),
- après traversée du circuit dans le carrousel de stockage (U) pendant une durée de séjour prédéfinie pour un pneumatique cru (11), transfert des pneumatiques crus (11) à une deuxième température (T2R) supérieure à la première température (T1R) des pneumatiques crus (11), sur un premier convoyeur d'évacuation (32) pour le transport dans le dispositif de vulcanisation (50), et des pneumatiques vulcanisés sur un deuxième convoyeur d'évacuation (33), sachant que les pneumatiques vulcanisés (12) sont évacués à une deuxième température (T2V) qui est inférieure à la première température (T1V) des pneumatiques vulcanisés (12),
- transfert des pneumatiques crus (11) à la deuxième température (T2R) depuis le dispositif d'évacuation (3) au moyen du dispositif de convoyage et de transfert (52) vers la presse à vulcaniser (51) du dispositif de vulcanisation (50) et
- vulcanisation du pneumatique cru préchauffé (11) dans la presse à vulcaniser (51) pour le transformer en pneumatique vulcanisé (12) et transfert des pneumatiques vulcanisés (12) à la première température prédéfinie (T1V) depuis la presse (51) du dispositif de vulcanisation (50) au moyen du dispositif de convoyage et de transfert (52) vers le dispositif d'alimentation (2) du dispositif (10) pour préchauffer.
